# EUROPEAN PATENT APPLICATION

(11) **EP 2 200 331 A2**
(43) Date of publication of application: **23.06.2010**
(21) Application number: 09175743.5
(22) Date of filing: 12.11.2009
(51) Int. Cl.: H04N 13/00, H04N 5/00, H04N 5/76, H04N 5/91, H04N 7/173, H04N 7/26, H04N 7/58, H04N 7/60

(54) **3D/stereoscopic video broadcasting involving time-shifted transmission of a 3D auxiliary video data stream**

(30) Priority: 19.12.2008 KR 20080130656
(71) Applicant: Electronics and Telecommunications Research Institute, Daejeon 305-700 (KR)
(72) Inventor: LEE, Bong-Ho, Daejeon (KR); YUN, Kug-Jin, Daejeon (KR); LEE, Hyun, Daejeon (KR); LEE, Gwang-Soon, Daejeon (KR); HUR, Nam-Ho, Daejeon (KR); KIM, Jin-Woong, Daejeon (KR); LEE, Soo-In, Daejeon (KR)
(74) Representative: Betten & Resch

(57) **Abstract**

A broadcasting transmission/reception apparatus and method for transmitting three-dimensional (3D) auxiliary video and non-realtime service information table in non-realtime is provided. The broadcasting transmission apparatus includes: a non-realtime broadcasting server configured to generate three-dimensional (3D) auxiliary video stream for 3D auxiliary video and non-realtime service information table data stream for a non-realtime service information table data including information needed to receive and restore the 3D auxiliary video before a time point when a 3D stereoscopic broadcasting service is provided; a media coder configured to generate two-dimensional (2D) video stream for 2D video at a predetermined bit rate based on a bit rate of the 3D auxiliary video stream; and a multiplexer configured to multiplex the 2D video stream, the 3D auxiliary video stream, and the non-realtime service information table data stream on a predetermined sub-channel.

## Description

### CROSS-REFERENCE TO RELATED APPLICATIONS

The present invention claims priority of Korean Patent Application No. 10-2008-0130656, filed on December 19, 2008, which is incorporated herein by reference in its entirety.

### BACKGROUND OF THE INVENTION

### Field of the Invention

The present invention relates to a apparatus and method for transmitting/receiving broadcasting signals; and, more particularly, to a apparatus and method for transmitting/receiving broadcasting signals to provide a non-realtime three-dimensional (3D) stereoscopic broadcasting service.

### Description of Related Art

A digital three-dimensional (3D) stereoscopic broadcasting service makes viewers feel a sense of depth by using a plurality of videos with a predetermined disparity. The 3D stereoscopic broadcasting service uses auxiliary videos whose viewpoint is different from the viewpoint of two-dimensional (2D) videos provided in a 2D broadcasting service and used for forming 3D stereoscopic videos, which will be referred to as 3D auxiliary videos, hereafter. For instance, when a 2D video is an video of a left-eye viewpoint, the 3D auxiliary video is an video of a right-eye viewpoint or multiple viewpoint.

Differently from the 2D broadcasting service, the 3D stereoscopic broadcasting service requires more transmission bandwidth than the 2D broadcasting service, because it should transmit the 3D auxiliary videos in addition to the 2D videos.

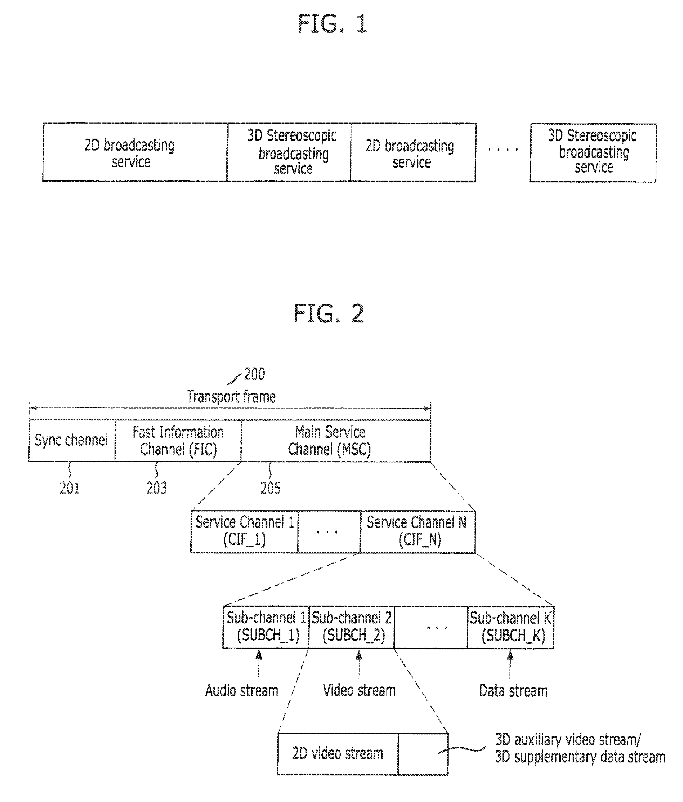

Fig. 1 illustrates a schedule of broadcasting program services on a certain Digital Multimedia Broadcasting (DMB) service channel. Referring to Fig. 1, the DMB apparatus provides both 2D broadcasting service and 3D stereoscopic broadcasting service on the certain service channel. 2D video stream, 3D auxiliary video stream, and 3D supplementary data stream are transmitted in realtime at the time when a corresponding broadcasting service is scheduled to be provided. Since the number of DMB service channels is limited, it is desirable to provide both 2D broadcasting service and 3D stereoscopic broadcasting service on one service channel, rather than to allocate a service channel dedicated to a 3D stereoscopic broadcasting service. Herein, the 3D supplementary data stream is data stream including information needed for a DMB terminal to receive and restore 3D auxiliary videos, such as depth information and disparity information. The disparity information denotes a range difference between the viewpoint of a left-eye video and the viewpoint of a right-eye video. The depth information signifies a distance difference between the left-eye video and the right-eye video with respect to a predetermined object.

Meanwhile, since there is a difference in the transmission bandwidth required by the 3D stereoscopic broadcasting service and the transmission bandwidth required by 2D broadcasting service, the following problems may occur.

When the certain service channel accommodating both 2D broadcasting service and 3D stereoscopic broadcasting service is allocated with sufficient transmission bandwidth needed to provide a 3D stereoscopic broadcasting service, which transmits 3D auxiliary video stream, and 3D supplementary data stream in addition to 2D video stream, the transmission bandwidth is consumed wastefully during a 2D broadcasting service. On the other hand, when the service channel is allocated with as much transmission bandwidth as needed to provide a 2D broadcasting service, the quality of 3D videos restored during a 3D stereoscopic broadcasting service are deteriorated due to insufficient transmission bandwidth.

### SUMMARY OF THE INVENTION

An embodiment of the present invention is directed to providing a broadcasting transmission/reception apparatus which transmits three-dimensional (3D) auxiliary videos needed to provide a 3D stereoscopic broadcasting service and 3D supplementary data including information about the 3D auxiliary video in non-realtime.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with an aspect of the present invention, there is provided a broadcasting transmission apparatus, which includes: a non-realtime broadcasting server configured to generate 3D auxiliary video stream for 3D auxiliary video and non-realtime service information table data stream for a non-realtime service information table including information needed to receive and restore the 3D auxiliary video before a time point when a 3D stereoscopic broadcasting service is provided; a media coder configured to generate two-dimensional (2D) video stream for 2D video at a predetermined bit rate based on a bit rate of the 3D auxiliary video stream; and a multiplexer configured to multiplex the 2D video stream, the 3D auxiliary video stream, and the non-realtime service information table data stream on a predetermined sub-channel.

In accordance with another aspect of the present invention, there is provided a broadcasting reception apparatus, which includes: a signal receiver configured to receive and demultiplex Digital Multimedia Broadcasting (DMB) signals and separate the DMB signals into 3D auxiliary video stream of a 3D auxiliary video for a 3D stereoscopic broadcasting service and non-realtime service information table data stream which includes information needed to receive and restore the 3D auxiliary video; a data storage configured to store the 3D auxiliary video stream and the non-realtime service information table data stream; a 2D video processor configured to decode 2D video stream generated from the demultiplexing and generate 2D video; a 3D video processor configured to generate the 3D auxiliary video by decoding the stored 3D auxiliary video stream and the stored non-realtime service information table data stream, and generate 3D video by using the 2D video and the 3D auxiliary video; and a display unit configured to display the 2D video and the 3D video.

In accordance with another aspect of the present invention, there is provided a broadcasting transmission method, which includes: generating three-dimensional (3D) auxiliary video stream and non-realtime service information table data; transmitting two-dimensional (2D) video stream, the 3D auxiliary video stream and the non-realtime service information table data; wherein the non-realtime service information table data includes: a section body configured to include information needed to receive and restore the 3D auxiliary video stream to provide a 3D stereoscopic broadcasting service; and a section header configured to include information needed to receive the non-realtime service information table data.

In accordance with another aspect of the present invention, there is provided a broadcasting reception method, which includes: receiving and demultiplexing Digital Multimedia Broadcasting (DMB) signals to thereby generate 3D auxiliary video transport stream of a 3D auxiliary video for a 3D stereoscopic broadcasting service and non-realtime service information table transport stream including information needed to receive and restore the 3D auxiliary video; separately storing the 3D auxiliary video transport stream of a 3D auxiliary video for a 3D stereoscopic broadcasting service and the non-realtime service information table transport stream; decoding 2D video transport stream generated from the demultiplexing to thereby produce 2D video; receiving a user request for the 3D stereoscopic broadcasting service; and generating 3D video based on the 2D video by decoding the stored 3D auxiliary video transport stream and the non-realtime service information table transport stream upon receipt of the user request.

### BRIEF DESCRIPTION OF THE DRAWINGS

Fig. 1 illustrates a schedule of broadcasting program services on a certain Digital Multimedia Broadcasting (DMB) service channel.

Fig. 2 illustrates a transport frame 200 transmitted from a three-dimensional (3D) stereoscopic broadcasting transmission apparatus in accordance with an embodiment of the present invention.

Fig. 3 is a block view showing a 3D stereoscopic broadcasting transmission apparatus in accordance with an embodiment of the present invention.

Fig. 4 is a block view illustrating a non-realtime broadcasting server 303 of Fig. 3.

Fig. 5 illustrates a data structure of a non-realtime service information table.

Fig. 6 is a block view describing a 3D stereoscopic broadcasting reception apparatus in accordance with an embodiment of the present invention.

Fig. 7 is a flowchart describing a 3D stereoscopic broadcasting transmission method in accordance with an embodiment of the present invention.

Fig. 8 is a flowchart describing a 3D stereoscopic broadcasting reception method in accordance with an embodiment of the present invention.

### DESCRIPTION OF SPECIFIC EMBODIMENTS

The advantages, features and aspects of the invention will become apparent from the following description of the embodiments with reference to the accompanying drawings, which is set forth hereinafter.

Fig. 2 illustrates a transport frame 200 transmitted from a three-dimensional (3D) stereoscopic broadcasting transmission apparatus in accordance with an embodiment of the present invention.

Referring to Fig. 2, the transport frame 200 includes a sync channel 201, a fast information channel (FIC) 203, and a main service channel (MSC) 205. The transport frame 200 is transformed into transport stream to be transmitted.

The sync channel 201 includes information needed for synchronization when a Digital Multimedia Broadcasting (DMB) signal receiving apparatus receives and demodulates the transport frame 200. The FIC 203 includes diverse control informations needed for a broadcasting service and emergency data needed for fast transmission.

The MSC 205 includes a plurality of service channels CIF_1 to CIF_N, and each of the service channels CIF_1 to CIF_N includes a plurality of sub-channels SUBCH_1 to SUBCH_K. Audio stream and video stream needed for a 3D stereoscopic broadcasting service and data stream needed for a data service are transmitted through the respective sub-channels SUBCH_1 to SUBCH_K.

In accordance with an embodiment of the present invention, the 3D stereoscopic broadcasting transmission apparatus transmits 2D video stream in realtime through a second sub-channel SUBCH_2 for transmitting video stream while transmitting 3D auxiliary video stream and 3D supplementary data stream in non-realtime. In other words, the 3D stereoscopic broadcasting transmission apparatus of this embodiment of the present invention transmits the 3D auxiliary video stream and the 3D supplementary data stream through the second sub-channel SUBCH_2 along with the 2D video stream at a predetermined bit rate before the 3D stereoscopic broadcasting service is provided so as to prevent the 2D video stream from being distorted. To be specific, the 3D stereoscopic broadcasting transmission apparatus transmits the 3D auxiliary video stream and the 3D supplementary data stream in non-realtime for a longer time at a lower bit rate than the time and bit rate when the 3D auxiliary video stream and the 3D supplementary data stream are transmitted in realtime.

Therefore, it does not have to allocate as wide transmission bandwidth as needed for a 3D stereoscopic broadcasting service to the service channel and eventually wasteful consumption of the transmission bandwidth can be prevented. Moreover, the 3D auxiliary video stream and the 3D supplementary data stream can be transmitted through a transmission bandwidth needed for a 2D broadcasting service without deterioration in 3D videos.

The 3D stereoscopic broadcasting transmission apparatus of this embodiment of the present invention can transmit the 3D auxiliary video stream and the 3D supplementary data stream in non-realtime through the second sub-channel SUBCH_2 along with the 2D video stream based on a null packet method and a constant bit rate allocation method.

The null packet method uses a null packet which is used when 2D video stream of a relatively low bit rate that does not use the entire transmission bandwidth of the second sub-channel SUBCH_2 are transmitted. In other words, the 3D auxiliary video stream and the 3D supplementary data stream may be additionally transmitted instead of the null packet generated when the 2D video stream are transmitted.

The constant bit rate allocation method is a method of reserving a bandwidth for the 3D auxiliary video stream in advance in the transmission bandwidth of the second sub-channel SUBCH_2. To be specific, the constant bit rate method calculates the size and retransmission number of the 3D auxiliary video stream in advance, adjusts a transmission bandwidth for transmitting the 2D video stream in advance, and transmits the 3D auxiliary video stream and the 3D supplementary data stream through a vacant transmission bandwidth.

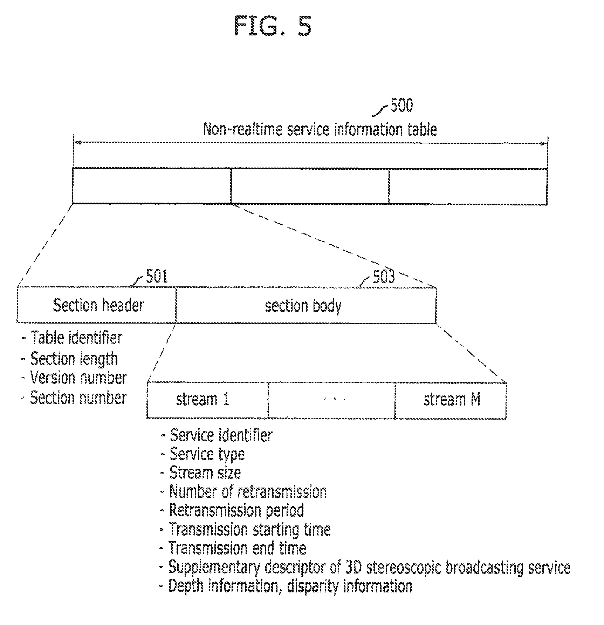

The 3D supplementary data stream includes such information as the size of the 3D auxiliary video stream and the retransmission number thereof. The size of the 3D supplementary data stream may be neglected because it is very small compared to the size of the 3D auxiliary video stream. The 3D supplementary data stream further includes information for receiving and restoring the 3D auxiliary video stream, which will be described later on. The data structure of the 3D supplementary data stream will be described later with reference to Fig. 5.

A 3D stereoscopic broadcasting reception apparatus (see Fig. 5) of an embodiment of the present invention receives the 3D auxiliary video stream and the 3D supplementary data stream, which are transmitted in non-realtime, stores them, and restores 3D videos based on the stored 3D auxiliary video stream and 3D supplementary data stream at a time point when a 3D stereoscopic broadcasting service is provided.

Meanwhile, the 3D stereoscopic broadcasting transmission apparatus may transmit the 3D auxiliary video stream and the 3D supplementary data stream in non-realtime through the second sub-channel SUBCH_2 in a time band when the 2D broadcasting service is not provided, for example, at night.

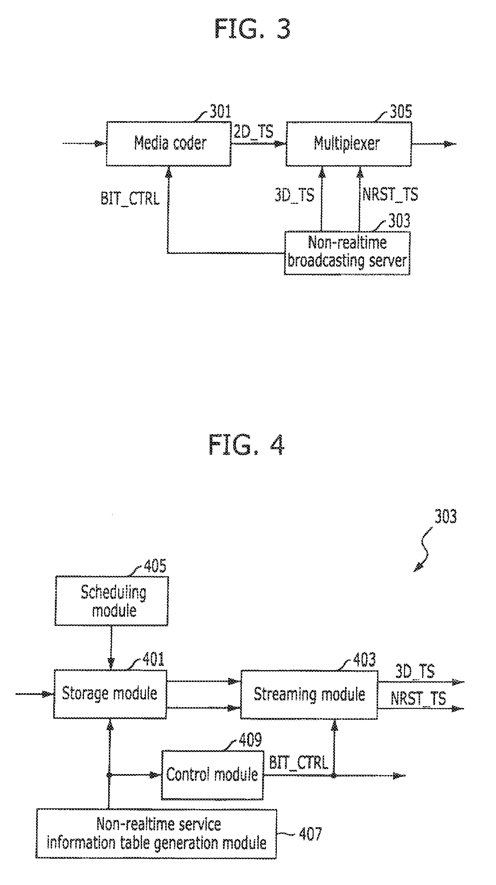

Fig. 3 is a block view showing a 3D stereoscopic broadcasting transmission apparatus in accordance with an embodiment of the present invention.

Referring to Fig. 3, the 3D stereoscopic broadcasting transmission apparatus includes a media coder 301, a non-realtime broadcasting server 303, and a multiplexer 305. The embodiment of Fig. 3 shows 3D auxiliary video and 3D supplementary data transmitted based on the constant bit rate allocation method. And the embodiment of Fig. 3 shows 3D auxiliary video and 3D supplementary data transmitted as type of transport stream. Since the 3D supplementary data includes information on the 3D auxiliary video transmitted in non-realtime, it will be referred to as a non-realtime service information table data(NRST), hereafter.

The media coder 301 codes 2D video, transforms the 2D video into 2D video transport stream 2D_TS, and transmits the 2D video transport stream 2D_TS to a multiplexer 305. The 2D video may be provided from a photographing device such as a camera. Herein, the media coder 301 may code the 2D video based on the Moving Picture Experts Group 2 or 4 (MPEG-2/4) or Audio Video Coding (AVC) method. To be more specific, the media coder 301 codes the 2D video to thereby generate elementary stream (ES) and packetizes the elementary stream to thereby generate packetized elementary stream (PES). Subsequently, the media coder 301 outputs 2D video transport stream 2D_TS based on the packetized elementary stream.

The media coder 301 adjusts a bit rate based on bit rate control information BIT_CTRL outputted from the non-realtime broadcasting server 303 and codes the 2D video.

Meanwhile, the media coder 301 may code the 2D video and output it in the form of an electronic file. The electronic file may be of an MP4 file format defined by the MPEG.

The non-realtime broadcasting server 303 stores the 3D auxiliary video and the non-realtime service information table and transform the 3D auxiliary video and the non-realtime service information table into transport streams, which are 3D auxiliary video transport stream 3D_TS and the non-realtime service information table transport stream NRST_TS before the 3D stereoscopic broadcasting service is provided. The non-realtime broadcasting server 303 transmits the 3D auxiliary video transport stream 3D_TS and the non-realtime service information table transport stream NRST_TS to the multiplexer 305.

Also, the non-realtime broadcasting server 303 determines a transmission bandwidth needed to transmit the 3D auxiliary video transport stream 3D_TS and outputs bit rate control information BIT_CTRL to the media coder 301. Herein, it is possible to prevent the quality of the 2D video from being deteriorated due to excessively small bit rate of the 2D video transport stream 2D_TS by limiting the transmission bandwidth needed to transmit the 3D auxiliary video transport stream 3D_TS to a predetermined value.

The multiplexer 305 multiplexes and outputs the 3D auxiliary video transport stream 3D_TS, the non-realtime service information table transport stream NRST_TS, and the 2D video transport stream 2D_TS on a predetermined sub-channel, e.g., the second sub-channel SUBCH_2. Since the 2D video transport stream 2D_TS, the 3D auxiliary video transport stream 3D_TS, and the non-realtime service information table transport stream NRST_TS are transmitted together on the second sub-channel SUBCH_2, they do not have to be multiplexed together. Herein, the multiplexer 305 receives a Program Clock Reference (PCR) so that the 2D video and the 3D auxiliary video should be synchronized in the DMB signal receiving apparatus. Since the 3D auxiliary video transport stream 3D_TS and the non-realtime service information table transport stream NRST_TS are transmitted in realtime, when they are not transmitted, the multiplexer 305 outputs only the 2D video transport stream 2D_TS.

Although not shown in the drawing, in case of the DMB service, the multiplexer 305 may multiplex multiplexed video transport stream outputted from the non-realtime broadcasting server 303 together with other streams such as audio transport stream, Binary Format for Scene (BIFS) transport stream, and Program Specific Information (PSI) transport stream, and output DMB signals of the transport frame 200 shown in Fig. 2. The video transport stream may be transmitted in an enhanced stream mode (ESM) transport mode. The ESM transport mode is a transport mode defined by the DMB to transmit data stream outputted at a uniform bit rate such as video. Error correction and Reed Solomon (RS) coding and interleaver coding for stable transmission are applied to the ESM transport mode.
The DMB signals are modulated and transmitted to the DMB signal receiving apparatus.

BIFS is a technology in support of a data service interlocking with a bi-directional data service or broadcasting program. For example, data related to a broadcasting program, e.g., information about a director or casts, may be serviced based on the BIFS. PSI is detailed information of a program. It provides information on which program the DMB signal receiving apparatus should select, which packet it should take from the selected program, and how to decode the packet. The PSI includes a Program Map Table (PMT), a Program Association Table (PAT), a Conditional Access Table (CAT), and a Network Information Table (NIT).

Each of the packets constituting the 2D video transport stream 2D_TS, the 3D auxiliary video transport stream 3D_TS, and the non-realtime service information table transport stream NRST_TS is multiplexed with a different packet ID (PID), and the PAT and the PMT includes information about the 2D video transport stream 2D_TS, the 3D auxiliary video transport stream 3D_TS, and the non-realtime service information table transport stream NRST_TS. The DMB signal receiving apparatus may check the PID information by using the PAT and the PMT, extract desired information, and restore the desired information.

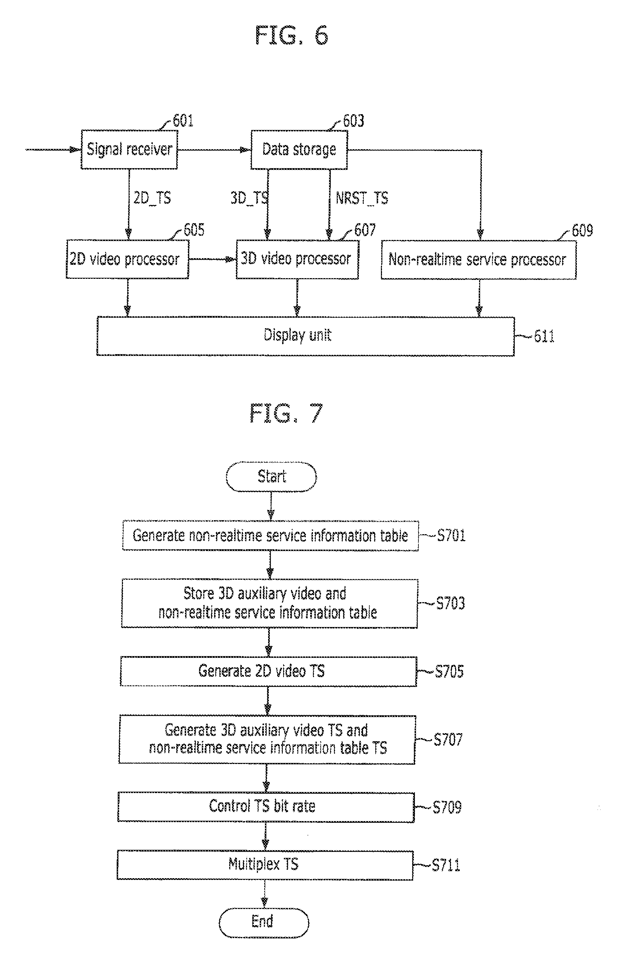

Meanwhile, the media coder 301 may be designed to receive the 3D auxiliary video transport stream 3D_TS and the non-realtime service information table transport stream NRST_TS, which are generated in the non-realtime broadcasting server 303, multiplex them together with the 2D video transport stream 2D_TS, and transmit them to the multiplexer 305. Also, the non-realtime broadcasting server 303 may store non-realtime data streams for a non-realtime data service, and transmits the non-realtime data streams to the multiplexer 305. An example of the non-realtime data service may be a whether forecast service. The non-realtime data service will be described in detail later on with reference with Fig. 6.

Fig. 4 is a block view illustrating a non-realtime broadcasting server 303 of Fig. 3. Referring to Fig. 4, the non-realtime broadcasting server 303 includes a storage module 401, a streaming module 403, a scheduling module 405, a non-realtime service information table generation module 407, and a control module 409.

The storage module 401 stores 3D auxiliary video and a non-realtime service information table and transmits them to the streaming module 403 under the control of the scheduling module 405.

The scheduling module 405 controls transmission time points of the storage module 401 based on broadcasting service schedule information. In other words, the storage module 401 stores the 3D auxiliary video and the non-realtime service information table under the control of the scheduling module 405 before a 3D stereoscopic broadcasting service is provided.

The streaming module 403 codes the 3D auxiliary video and the non-realtime service information table, which are transmitted from the storage module 401, to thereby transform them into 3D auxiliary video transport stream 3D_TS and non-realtime service information table transport stream NRST_TS, and transmits them to the multiplexer 305. The streaming module 403 codes the 3D auxiliary video at a predetermined bit rate based on a bit rate control signal BIT_CTRL and outputs 3D auxiliary video transport stream 3D_TS.

The control module 409 calculates a bit rate needed to transmit 3D auxiliary video transport stream 3D_TS based on the non-realtime service information table. The control module 409 generates bit rate control information BIT_CTRL and transmits it to the media coder 301 and the streaming module 403 so that the media coder 301 could control the bit rate of the 2D video transport stream 2D_TS. In short, the control module 409 controls the 2D video transport stream 2D_TS and the 3D auxiliary video transport stream 3D_TS.

The non-realtime service information table generation module 407 generates the non-realtime service information table which will be used for the 3D auxiliary video transport stream 3D_TS to be received and restored reliably in the DMB signal receiving apparatus.

Fig. 5 illustrates a data structure of a non-realtime service information table 500. Referring to Fig. 5, the non-realtime service information table 500 includes a section header 501 and a section body 503.

The section header 501 includes information for receiving the non-realtime service information table 500, e.g., a table identifier, a section length, a version number, and a section number. The section body 503 includes information for receiving and restoring the 3D auxiliary video transport stream 3D_TS, e.g., a service identifier, a service type, a stream size, the number of retransmission, the period of retransmission, transmission starting time, transmission end time, a supplementary identifier of a 3D stereoscopic broadcasting service and so forth. Meanwhile, the information included in the section header 501 and the section body 503 may be changed according to a 3D stereoscopic broadcasting transmission/reception apparatus.

The table identifier is an identifier of the non-realtime service information table 500. Since the non-realtime service information table 500 may be formed of multiple data and transmitted according to a apparatus, the section header 501 includes the table identifier.

The section length signifies the size of the section body 503. Recognizes the size of the section body 503, the DMB signal receiving apparatus expects the size of the non-realtime service information table 500 and receives the non-realtime service information table 500.

The version number signifies the version number of the non-realtime service information table 500 and the version number increases by 1 as the version changes.

The section number signifies the number of the section header 501 and the section body 503 included by the non-realtime service information table 500. As described above, since the non-realtime service information table 500 can include a plurality of section headers and section bodies, the section header 501 includes the section number.

The DMB signal receiving apparatus may receive the non-realtime service information table 500 by using the information included in the section header 501.

The section body 503 includes a plurality of streams, and each of the streams includes information about the 3D stereoscopic broadcasting service. For example, a first stream includes information about a 3D stereoscopic broadcasting to be shown at 3 o'clock, while a second stream includes information about a 3D stereoscopic broadcasting to be on air at 4 o'clock. In other words, each of the streams may include information corresponding to each 3D auxiliary video transport stream 3D_TS. Herein, the information included in the streams is the service identifier, the service type, the stream size, the number of retransmission, the period of retransmission, the transmission starting time, the transmission end time, and the supplementary descriptor of a 3D stereoscopic broadcasting service, the depth information, and the disparity information.

The service identifier signifies which broadcasting program of which service channel the streams are for. The service type indicates whether the streams include information about the 3D stereoscopic broadcasting program or a BIFS-based 3D stereoscopic broadcasting data service.

The stream size indicates the size of the 3D auxiliary video transport stream 3D_TS. The DMB signal receiving apparatus may allocate a memory in advance or examine the size of the finally received 3D auxiliary video transport stream 3D_TS based on the stream size information of the 3D auxiliary video transport stream 3D_TS.

The number of retransmission and the period of retransmission signify the number of retransmission and the period of retransmission of the 3D auxiliary video transport stream 3D_TS. Since the DMB signal receiving apparatus can hardly receive a 3D auxiliary video transport stream 3D_TS at once in a wireless communication environment, the 3D auxiliary video transport stream 3D_TS may be retransmitted. The DMB signal receiving apparatus receives the 3D auxiliary video transport stream 3D_TS based on the number of retransmission and the period of retransmission.

The transmission starting time and the transmission end time signify the time when the 3D auxiliary video transport stream 3D_TS begins to be transmitted and the time when its transmission ends, respectively. The transmission starting time and the transmission end time may be represented using Modified Julian Date (MJD) and Universal Time Coordinated (UTC).

The supplementary descriptor of a 3D stereoscopic broadcasting service includes information needed to restore the 3D auxiliary video transport stream 3D_TS and generate 3D video. The supplementary descriptor of a 3D stereoscopic broadcasting service may be a descriptor about a 3D video format and a coding scheme.

The 3D video format indicates whether the 3D video is a binocular video or a multi-viewpoint video using depth information or disparity information. The 3D video format may also indicate the frame size of the 3D video. The coding scheme indicates the coding scheme of the 3D auxiliary video transport stream 3D_TS. The 3D auxiliary video may be coded based on MPEG-2, MPEG-4, or H.264/AVC.

The DMB signal receiving apparatus may restore the 3D video by using the information included in the section body 503.

Meanwhile, since the DMB signal receiving apparatus may detect PID information and extract and restore desired information by using a Program Association Table (PAT) and a Program Map Table (PMT), the identifier defined in the non-realtime service information table 500 may be included in the PAT and the PMT.

Fig. 6 is a block view describing a 3D stereoscopic broadcasting reception apparatus in accordance with an embodiment of the present invention.

Referring to Fig. 6, the 3D stereoscopic broadcasting reception apparatus includes a signal receiver 601, a data storage 603, a 2D video processor 605, a 3D video processor 607, a non-realtime service processor 609, and a display unit 611. The 3D stereoscopic broadcasting reception apparatus corresponds to the DMB signal receiving apparatus.

The signal receiver 601 receives and demodulates DMB signals transmitted from the 3D stereoscopic broadcasting transmission apparatus. Then, the signal receiver 601 demultiplexes the demodulated DMB signals into 2D video transport stream 2D_TS, 3D auxiliary video transport stream 3D_TS, non-realtime service information table transport stream NRST_TS, audio transport stream, BIFS transport stream, PSI transport stream and so forth. Then, the signal receiver 601 transmits the 3D auxiliary video transport stream 3D_TS, which is transmitted in non-realtime, and the non-realtime service information table transport stream NRST_TS to the data storage 603. Herein, the signal receiver 601 may receive the 3D auxiliary video transport stream 3D_TS based on a PSI and a non-realtime service information table.

After receiving the 3D auxiliary video transport stream 3D_TS based on the PAT, the PMT, and the non-realtime service information table, the signal receiver 601 transmits the 3D auxiliary video transport stream 3D_TS and the non-realtime service information table transport stream NRST_TS to the data storage 603. The data storage 603 stores the 3D auxiliary video transport stream 3D_TS and the non-realtime service information table transport stream NRST_TS and transmits them to the 3D video processor 607 at a time point when the 3D stereoscopic broadcasting service is to be provided according to a broadcasting schedule.

The 2D video processor 605 receives 2D video transport stream 2D_TS, generates 2D video by performing decoding, and transmits the generated 2D video to the display unit 611. The display unit 611 displays the 2D video transmitted from the 2D video processor 605.

The 3D video processor 607 receives the 3D auxiliary video transport stream 3D_TS and the non-realtime service information table transport stream NRST_TS from the data storage 603 and decodes them to thereby generate 3D auxiliary video. The 3D video processor 607 receives the 2D video from the 2D video processor 605 and combines the 2D video with the 3D auxiliary video to thereby generate 3D video. The 3D video processor 607 may generate the 3D video by interlacing the 2D video and the 3D auxiliary video with each other based on the depth information or disparity information included in the decoded non-linear service information table. The 3D video processor 607 may generate the 3D video by applying diverse 3D stereoscopic video generation algorithms.

The 3D auxiliary video and the 2D video should be exactly synchronized on a frame basis to enhance the cubic effect of the 3D video. The 3D video processor 607 may synchronize the 3D auxiliary video and the 2D video based on the PCR.

The 3D video generated by the 3D video processor 607 is transmitted to the display unit 611, and the display unit 611 displays the 3D video. Meanwhile, the display unit 611 may receive and display the 2D video from the 2D video processor 605 at the time point when the 3D stereoscopic broadcasting service is provided upon receipt of a user request.

As illustrated in Fig. 3, the non-realtime data transport stream for a non-realtime data service may be included in the DMB signals, and the signal receiver 601 may transmit the non-realtime data transport stream to the data storage 603 together with the 3D auxiliary video transport stream 3D_TS and the non-realtime service information table transport stream NRST_TS. The non-realtime service processor 609 may read the non-realtime data transport stream from the data storage 603 upon receipt of a user request, decodes the non-realtime data transport stream, and provides the non-realtime data service.

Fig. 7 is a flowchart describing a 3D stereoscopic broadcasting transmission method in accordance with an embodiment of the present invention.

In step S701, the non-realtime broadcasting server 303 generates a non-realtime service information table, and stores the non-realtime service information table along with 3D auxiliary video in step S703.

In step S705, the media coder 301 codes 2D video and generates 2D video transport stream 2D_TS to be transmitted in realtime. In step S707, the non-realtime broadcasting server 303 generates 3D auxiliary video transport stream 3D_TS and non-realtime service information table transport stream NRST_TS, which are to be transmitted in non-realtime, by coding the 3D auxiliary video and the non-realtime service information table before a 3D stereoscopic broadcasting service is provided.

Herein, the non-realtime broadcasting server 303 calculates a bit rate needed to transmit the 3D auxiliary video based on the non-realtime service information table, generates bit rate control information BIT_CTRL, and transmits the bit rate control information BIT_CTRL to the media coder 301 so that the media coder 301 could generate the 2D video transport stream 2D_TS at a predetermined bit rate. In short, the non-realtime broadcasting server 303 controls the bit rate of transport stream in step S709.

In step S711, the 2D video transport stream 2D_TS, the 3D auxiliary video transport stream 3D_TS, and the non-realtime service information table transport stream NRST_TS are multiplexed in the media coder 301 or the non-realtime broadcasting server 303, finally multiplexed in the multiplexer 305 along with audio transport stream, and transmitted to the DMB signal receiving apparatus.

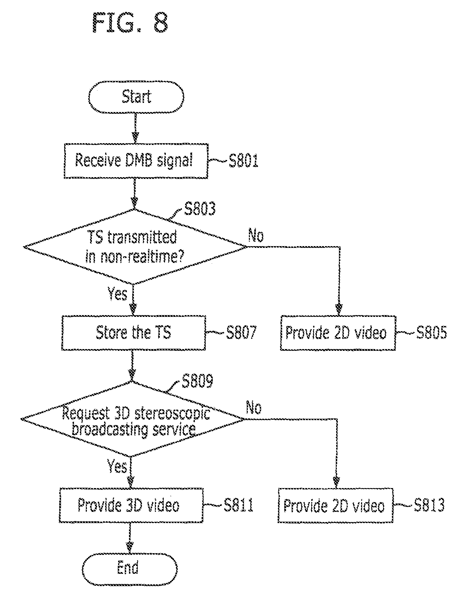

Fig. 8 is a flowchart describing a 3D stereoscopic broadcasting reception method in accordance with an embodiment of the present invention.

In step S801, the signal receiver 601 demodulates and demultiplexes DMB signals transmitted from the 3D stereoscopic broadcasting transmission apparatus. In step S803, the signal receiver 601 discriminates transport streams transmitted in non-realtime, such as 3D auxiliary video transport stream 3D_TS, the non-realtime service information table transport stream NRST_TS, and the non-realtime service data transport stream, from transport streams transmitted in realtime among the demultiplexed transport streams. In step S805, 2D video transport stream 2D_TS transmitted in realtime is decoded in the 2D video processor 605 and transmitted to the display unit 611. In step S807, the transport streams transmitted in non-realtime are stored in the data storage 603.

The transport streams stored in the data storage 603 are decoded in the 3D video processor 607 to thereby generate 3D video at a time point when a 3D stereoscopic broadcasting service is provided, and the 3D video is provided to the display unit 611. Herein, according to whether a user request for the 3D stereoscopic broadcasting service is received or not, the display unit 611 displays the 3D video in step S811, or show the 2D video in step S813.

Meanwhile, a non-realtime service provided by the non-realtime service processor 609 may be shown in the display unit 611 if there is a user request.

The method of the present invention described above may be programmed for a computer. Codes and code segments constituting the computer program may be easily inferred by a computer programmer of ordinary skill in the art to which the present invention pertains. The computer program may be stored in a computer-readable recording medium, i.e., data storage, and it may be read and executed by a computer to realize the method of the present invention. The recording medium includes all types of computer-readable recording media, that is, it includes not only tangible media such as CD and DVD, but also intangible media such as carrier wave.

The apparatus and method of the present invention transmits 3D auxiliary videos needed to provide a 3D stereoscopic broadcasting service and 3D supplementary data including information about the 3D auxiliary video in non-realtime in addition to two-dimensional (2D) videos for a 2D broadcasting service.

While the present invention has been described with respect to the specific embodiments, it will be apparent to those skilled in the art that various changes and modifications may be made without departing from the spirit and scope of the invention as defined in the following claims.

## Claims

1. A broadcasting transmission apparatus, comprising:
a non-realtime broadcasting server configured to generate three-dimensional (3D) auxiliary video stream for 3D auxiliary video and non-realtime service information table data stream for a non-realtime service information table data including information needed to receive and restore the 3D auxiliary video before a time point when a 3D stereoscopic broadcasting service is provided;
a media coder configured to generate two-dimensional (2D) video stream for 2D video at a predetermined bit rate based on a bit rate of the 3D auxiliary video stream; and
a multiplexer configured to multiplex the 2D video stream, the 3D auxiliary video stream, and the non-realtime service information table data stream on a predetermined sub-channel.

2. The broadcasting transmission apparatus of claim 1,
wherein the non-realtime service information table data includes:
a section body configured to include information needed to receive and restore the 3D auxiliary video stream; and
a section header configured to include information needed to receive the non-realtime service information table data stream.

3. The broadcasting transmission apparatus of claim 2,
wherein the section body includes a service channel through which the 3D auxiliary video is provided, a size of the 3D auxiliary video stream, and a transmission time of the 3D auxiliary video stream.

4. The broadcasting transmission apparatus of claim 2 or 3, wherein the section header includes an identifier of the non-realtime service information table data, the number of section bodies, and a size of the section bodies.

5. The broadcasting transmission apparatus of one of claims 1 to 4, wherein the non-realtime broadcasting server includes:
a non-realtime service information table generation module configured to generate the non-realtime service information table data;
a storage module configured to store the non-realtime service information table data and the 3D auxiliary video;
a scheduling module configured to control a transmission time point of the non-realtime service information table data and the 3D auxiliary video that are stored in the storage module;
a streaming module configured to transform the non-realtime service information table data and the 3D auxiliary video transmitted from the storage module into the non-realtime service information table data stream and the 3D auxiliary video stream; and
a control module configured to control bit rates of the 2D video stream, the non-realtime service information table data stream, and the 3D auxiliary video stream.

6. A broadcasting reception apparatus, comprising:
a signal receiver configured to receive and demultiplex Digital Multimedia Broadcasting (DMB) signals and separate the DMB signals into three-dimensional (3D) auxiliary video stream of a 3D auxiliary video for a 3D stereoscopic broadcasting service and non-realtime service information table data stream which includes information needed to receive and restore the 3D auxiliary video;
a data storage configured to store the 3D auxiliary video stream and the non-realtime service information table data stream;
a two-dimensional (2D) video processor configured to decode 2D video stream generated from the demultiplexing and generate 2D video;
a 3D video processor configured to generate the 3D auxiliary video by decoding the stored 3D auxiliary video stream and the stored non-realtime service information table data stream, and generate 3D video by using the 2D video and the 3D auxiliary video; and
a display unit configured to display the 2D video and the 3D video.

7. The broadcasting reception apparatus of claim 6,
wherein the signal receiver receives the 3D auxiliary video stream based on the non-realtime service information table data and Program Specific Information (PSI).

8. The broadcasting reception apparatus of claim 6 or 7, wherein the 3D auxiliary video stream and the non-realtime service information table data stream are stored in the data storage before the 3D stereoscopic broadcasting service is provided, and transmitted to the 3D video processor when the 3D stereoscopic broadcasting service is provided.

9. The broadcasting reception apparatus of claim 6, 7, or 8, further comprising;
a non-realtime service processor configured to provide a non-realtime service by decoding the non-realtime service data stream,
wherein the non-realtime service data stream is multiplexed into the DMB signals and separately stored by the signal receiver and the data storage.

10. A broadcasting transmission method, comprising:
generating three-dimensional (3D) auxiliary video stream and non-realtime service information table data;
transmitting two-dimensional (2D) video stream, the 3D auxiliary video stream and the non-realtime service information table data;
wherein the non-realtime service information table data includes:
a section body configured to include information needed to receive and restore the 3D auxiliary video stream to provide a 3D stereoscopic broadcasting service; and
a section header configured to include information needed to receive the non-realtime service information table data.

11. The broadcasting transmission method of claim 10, further comprising:
controlling bit rates of the 2D video stream, the 3D auxiliary video stream and the non-realtime service information table data; and
multiplexing the 2D video stream, the 3D auxiliary video stream and non-realtime service information table data on a predetermined sub-channel.

12. The broadcasting transmission method of claim 10 or 11, wherein the section body includes a service channel through which the 3D auxiliary video is provided, a size of the 3D auxiliary video stream, and a transmission time of the 3D auxiliary video stream.

13. The broadcasting transmission method of claim 10, 11, or 12 wherein the section header includes an identifier of the non-realtime service information table data, the number of section bodies, and a size of the section bodies,

14. A broadcasting reception method, comprising:
receiving and demultiplexing Digital Multimedia Broadcasting (DMB) signals to thereby generate three-dimensional (3D) auxiliary video stream of a 3D auxiliary video for a 3D stereoscopic broadcasting service and non-realtime service information table data including information needed to receive and restore the 3D auxiliary video;
separately storing the 3D auxiliary video stream of a 3D auxiliary video for a 3D stereoscopic broadcasting service and the non-realtime service information table data;
decoding two-dimensional (2D) video stream generated from the demultiplexing to thereby produce 2D video;
receiving a user request for the 3D stereoscopic broadcasting service; and
generating 3D video based on the 2D video by decoding the stored 3D auxiliary video stream and the stored non-realtime service information table data upon receipt of the user request.

15. The broadcasting reception method of claim 14,
wherein the 3D auxiliary video stream and the non-realtime service information table data are stored before the 3D stereoscopic broadcasting service is provided and decoded when the 3D stereoscopic broadcasting service is provided.
